# EUROPEAN PATENT APPLICATION

(11) **EP 4 442 766 A1**
(43) Date of publication of application: **09.10.2024**
(21) Application number: 23767186.2
(22) Date of filing: 09.03.2023
(51) Int. Cl.: C08L 67/04, C08L 67/02, C08J 5/18, C08F 212/08, C08F 220/18, C08F 220/32, C08L 3/02

(54) **BIODEGRADABLE FILM**

(30) Priority: 10.03.2022 KR 20220030177; 10.03.2022 KR 20220030178; 07.03.2023 KR 20230029596
(71) Applicant: LG Chem, Ltd., Yeongdeungpo-gu Seoul 07336 (KR)
(72) Inventor: EOM, Hyunjoo, Daejeon 34122 (KR); PARK, Hyunwoo, Daejeon 34122 (KR); SHIM, Hong Shik, Daejeon 34122 (KR); CHOI, Ji Hwan, Daejeon 34122 (KR)
(74) Representative: Plasseraud IP
(86) International application number: PCT/KR2023/003220
(87) International publication number: WO 2023/172085

(57) **Abstract**

In the present disclosure, there is provided a biodegradable film including a hydroxyalkanoate-lactide copolymer and polybutylene adipate terephthalate (PBAT).

## Description

### FIELD OF THE INVENTION

### CROSS-REFERENCE TO RELATED APPLICATION(S)

This application claims the benefits of Korean Patent Applications No. 1 0-2022-0030178 filed on March 10, 2022, No. 10-2022-0030177 filed on March 10, 2022 and No. 10-2023-0029596 filed on March 7, 2023 with the Korean Intellectual Property Office, the disclosure of which is incorporated herein by reference in its entirety.

The present invention relates to a biodegradable film.

### BACKGROUND OF THE INVENTION

Recently, as interest in environmental protection and eco-friendliness has rapidly increased, the need for a method of cultivating eco-friendly agricultural products is increasing. Mulching is known as one of these eco-friendly farming methods. The mulching method covers the surface of the soil with a mulching film when cultivating crops to prevent the growth of weeds and pests, to maintain the soil moisture or control the soil temperature, to prevent soil erosion by rainwater in case of rain, and to reduce the use of pesticides.

The mulching film used in this mulching method greatly contributes to the productivity of agricultural products, but there are difficulties in collection and recycling after use. In general, synthetic resins such as polypropylene and polyethylene are used. Although biodegradable components are added as additives to impart biodegradability, biodegradation of the synthetic resin itself is impossible. In addition, the synthetic resin left without biodegradation has a problem of contaminating the soil.

Accordingly, an attempt has been made to manufacture a mulching film using polybutylene adipate terephthalate (PBAT), a biodegradable plastic. However, there is a problem in that the elongation of polybutylene adipate terephthalate (PBAT) is high, whereas mechanical properties such as Young's modulus are lower than conventional polyethylene films. In addition, since polybutylene adipate terephthalate (PBAT) is a 100% petroleum-based material, it has a low biomaterial content.

Accordingly, attempts have been made to improve physical properties and increase the biomaterial content by compounding various biodegradable materials into polybutylene adipate terephthalate (PBAT), but there is a problem in that tensile properties are low due to low compatibility between polybutylene adipate terephthalate and other biodegradable materials.

### SUMMARY OF THE INVENTION

### TECHNICAL PROBLEM

The present disclosure relates to a biodegradable film having excellent tensile properties such as yield strength and Young's modulus with an increased biomaterial content.

### TECHNICAL SOLUTION

According to one embodiment of the present disclosure, there is provided a biodegradable film including a hydroxyalkanoate-lactide copolymer and polybutylene adipate terephthalate (PBAT).

Hereinafter, a biodegradable film according to specific embodiments of the present invention will be described in more detail.

In this disclosure, unless otherwise specified herein, "comprise", "contain", or "include" refers to including a certain element (component) without particular limitation, and cannot be construed as excluding the addition of other elements (components).

In this disclosure, "polylactic acid prepolymer" refers to polylactic acid having a weight average molecular weight of 1,000 to 50,000 g/molobtained by oligomerizing lactic acid.

In this disclosure, "poly(3-hydroxypropionate) prepolymer" refers to poly(3-hydroxypropionate) having a weight average molecular weight of 1,000 to 50,000 g/mol obtained by oligomerizing 3-hydroxypropionate.

In addition, unless otherwise specified herein, the weight average molecular weight of the polylactic acid prepolymer, the poly(3-hydroxypropionate) prepolymer, and the copolymer can be measured using gel permeation chromatography (GPC). Specifically, after dissolving the prepolymer or copolymer in chloroform to a concentration of 2 mg/ml, 20 µl thereof is injected into GPC, followed by performing GPC analysis at 40 °C. At this time, chloroform is used as a mobile phase of GPC and introduced at a flow rate of 1.0 mL/min. Two Agilent Mixed-B columns are used in series, and an RI detector is used as a detector. Mw values are derived using a calibration curve formed using a polystyrene standard. 9 kinds of the polystyrene standard were used with the molecular weight of 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol.

As used herein, the term "substituted or unsubstituted" means being unsubstituted or substituted with one or more substituents selected from the group consisting of deuterium; a halogen group; a nitrile group; a nitro group; a hydroxyl group; a carbonyl group; an ester group; an imide group; an amino group; a phosphine oxide group; an alkoxy group; an aryloxy group; an alkylthioxy group; an arylthioxy group; an alkylsulfoxy group; an arylsulfoxy group; a silyl group; a boron group; an alkyl group; a cycloalkyl group; an alkenyl group; an aryl group; an aralkyl group; an aralkenyl group; an alkylaryl group; an alkylamine group; an aralkylamine group; a heteroarylamine group; an arylamine group; an arylphosphine group; and a heterocyclic group containing at least one of N, O and S atoms, or being unsubstituted or substituted with a substituent in which two or more substituents of the above-exemplified substituents are connected. For example, "a substituent in which two or more substituents are connected" may be a biphenyl group. Namely, a biphenyl group may be an aryl group, or it may also be interpreted as a substituent in which two phenyl groups are connected.

Conventionally, only polybutylene adipate terephthalate was used or other biodegradable materials were compounded with polybutylene adipate terephthalate in order to manufacture a biodegradable film. However, when using only the polybutylene adipate terephthalate, there are problems in that mechanical properties such as Young's modulus are low and the biomaterial content is also low. When other biodegradable materials are compounded with polybutylene adipate terephthalate, there is a problem of low tensile properties due to low compatibility between the materials.

The present inventors have found that a biodegradable film prepared by compounding a hydroxyalkanoate-lactide copolymer with polybutylene adipate terephthalate (PBAT) has excellent compatibility between materials, resulting in excellent tensile properties such as yield strength and Young's modulus, thereby completing the present invention.

In addition, since the hydroxyalkanoate-lactide copolymer exhibits eco-friendly and biodegradable properties while containing a large amount of biomaterials, the biodegradable film including the same can also maintain eco-friendly and biodegradable properties while using a large amount of biomaterials.

According to one embodiment of the present disclosure, there is provided a biodegradable film including a hydroxyalkanoate-lactide copolymer and polybutylene adipate terephthalate (PBAT).

The hydroxyalkanoate-lactide copolymer included in the biodegradable film according to one embodiment may be a block copolymer including at least one polyhydroxyalkanoate (PHA) block and at least one polylactic acid block. As the hydroxyalkanoate-lactide copolymer includes the above blocks, it can exhibit eco-friendliness and biodegradability of polyhydroxyalkanoate and polylactic acid.

The hydroxyalkanoate may be 3-hydroxybutyrate, 4-hydroxybutyrate, 2-hydroxypropionate, 3-hydroxypropionate, (D)-3-hydroxycarboxylate with a medium chain length of 6 to 14 carbon atoms, 3-hydroxyvalate, 4-hydroxyvalate or 5-hydroxyvalate. Therefore, the hydroxyalkanoate-lactide copolymer may be a 3-hydroxybutyrate-lactide copolymer, a 4-hydroxybutyrate-lactide copolymer, a 2-hydroxypropionate-lactide copolymer, a 3-hydroxypropionate-lactide copolymer, a 4-hydroxyvalate-lactide copolymer or a 5-hydroxyvalate-lactide copolymer. For example, the hydroxyalkanoate-lactide copolymer may be a 3-hydroxypropionate-lactide copolymer to improve flexibility and mechanical properties.

The 3-hydroxypropionate-lactide copolymer may be a block copolymer obtained by polymerizing a polylactic acid prepolymer and a poly(3-hydroxypropionate) prepolymer.

In the 3-hydroxypropionate-lactide copolymer, the poly(3-hydroxypropionate) prepolymer increases flexibility by lowering the glass transition temperature (Tg) and improves mechanical properties such as impact strength, while exhibiting excellent tensile strength and elastic modulus of the polylactic acid prepolymer. Thus, the brittleness of polylactic acid due to poor elongation can be prevented.

The polylactic acid prepolymer may be prepared by fermentation or polycondensation of lactic acid.

The polylactic acid prepolymer may have a weight average molecular weight of 1,000 g/mol or more, 5,000 g/mol or more, 6,000 g/mol or more, or 8,000 g/mol or more, and 50,000 g/mol or less, or 30,000 g/mol or less. In order to increase the crystallinity of the block containing repeating units derived from the polylactic acid prepolymer in the final block copolymer, the polylactic acid prepolymer may preferably have a high weight average molecular weight of more than 20,000 g/mol, 22,000g/mol or more, 23,000g/mol or more, or 25,000 g/mol or more, and 50,000 g/mol or less, 30,000 g/mol or less, 28,000 g/mol or less, or 26,000g/mol or less.

When the weight average molecular weight of the polylactic acid prepolymer is 20,000 g/mol or less, it is difficult to maintain the crystallinity of the polymer in the final block copolymer, because the crystallinity of the polymer is small. When the weight average molecular weight of the polylactic acid prepolymer exceeds 50,000 g/mol, the rate of side reactions occurring inside the prepolymer chains becomes faster than the reaction rate between the polylactic acid prepolymers during polymerization.

Meanwhile, the 'lactic acid' used in this disclosure refers to L-lactic acid, D-lactic acid, or a mixture thereof.

The poly(3-hydroxypropionate) prepolymer may be prepared by fermentation or polycondensation of 3-hydroxypropionate.

The weight average molecular weight of the poly(3-hydroxypropionate) prepolymer may be 1,000 g/mol or more, 5,000 g/mol or more, 8,000 g/mol or more, or 8,500 g/mol or more, and 50,000 g/mol or less, or 30,000 g/mol or less. In order to increase the crystallinity of the repeating unit derived from the poly(3-hydroxypropionate) prepolymer in the final block copolymer, the poly(3-hydroxypropionate) prepolymer may preferably have a high weight average molecular weight of more than 20,000 g/mol, 22,000g/mol or more, or 25,000 g/mol or more, and 50,000 g/mol or less, 30,000 g/mol or less, or 28,000 g/mol or less.

As described in the polylactic acid prepolymer, when the weight average molecular weight of the poly(3-hydroxypropionate) prepolymer is 20,000 g/mol or less, the crystallinity of the polymer is small, and thus it is difficult to maintain the crystallinity of the polymer in the final block copolymer. When the weight average molecular weight of the poly(3-hydroxypropionate) prepolymer exceeds 50,000 g/mol, the rate of side reactions occurring inside the prepolymer chains becomes faster than the reaction rate between the poly(3-hydroxypropionate) prepolymers during polymerization.

That is, at least one of the polylactic acid prepolymer or the poly(3-hydroxypropionate) prepolymer may have a weight average molecular weight of more than 20,000 g/mol and 50,000 g/mol or less.

Meanwhile, the lactic acid and 3-hydroxypropionate may be plastic and biodegradable compounds prepared from renewable sources by microbial fermentation, and the block copolymer including a polylactic acid prepolymer and a poly(3-hydroxypropionate) prepolymer formed by polymerizing them may also exhibit eco-friendliness and biodegradability. As a result, the biodegradable film including the block copolymer may include a large amount of biomaterials while exhibiting eco-friendliness and biodegradability.

The 3-hydroxypropionate-lactide copolymer is a block copolymer in which a polylactic acid prepolymer and a poly(3-hydroxypropionate) prepolymer are polymerized. In the block copolymer, a weight ratio of the polylactic acid prepolymer and the poly(3-hydroxypropionate) prepolymer may be 95:5 to 50:50, 90:10 to 55:45, 90:10 to 60:40, 90:10 to 70:30, or 90:10 to 80:20. When the poly(3-hydroxypropionate) prepolymer is included in an excessively small amount relative to the polylactic acid prepolymer, brittleness may increase. When the poly(3-hydroxypropionate) prepolymer is included in an excessive amount relative to the polylactic acid prepolymer, the molecular weight may be lowered, and thus processability and heat resistance may be deteriorated.

As described above, the 3-hydroxypropionate-lactide copolymer includes at least one poly(3-hydroxypropionate) block and at least one polylactic acid block, and may exhibit high crystallinity.

For example, the 3-hydroxypropionate-lactide copolymer may have a crystallinity of the polylactic acid block in the copolymer (Xc__{PLA}) of more than 0 and 50 or less, or a crystallinity of the poly(3-hydroxypropionate) block (Xc__{P(3HP)}) of 0 to 50, or more than 0 and 50 or less, as calculated according to the following Equations 1 and 2 using the crystallization temperature and melting temperature measured by differential scanning calorimetry.

In addition, the sum of the crystallinity of the polylactic acid block and the crystallinity of the poly(3-hydroxypropionate) block in the copolymer may be 20 to 100, more specifically 20 or more, 30 or more, or 32 or more, and 100 or less, 70 or less, 50 or less, or 48 or less.

As the copolymer satisfies the above-described crystallinity, flexibility and mechanical properties can be improved in a well-balanced manner, and excellent strength characteristics of polylactic acid and excellent elongation characteristics of poly(3-hydroxypropionate) can be simultaneously exhibited.

Meanwhile, when the sum of the crystallinities is too high, biodegradability and processability may be deteriorated, and when the sum of the crystallinities is too low, strength may be reduced. Crystallinity of polylactic acid block (XC_PLA)= [(PLA Tm area)-(PLA Tcc area)]/93.7

In Equation 1, the PLA Tm area is an integral value of the peak at the melting temperature (Tm) of the polylactic acid (PLA) block in the block copolymer measured by differential scanning calorimetry, and the PLA Tcc area is an integral value of the peak at the crystallization temperature (Tcc) of the polylactic acid block in the block copolymer measured by differential scanning calorimetry. Crystallinity of poly(3-hydroxypropionate) block (XC_P(3HP))= [(P(3HP) Tm area)-(P(3HP) Tcc area)]/64

In Equation 2, the P(3HP) Tm area is an integral value of the peak at the melting temperature (Tm) of the poly(3-hydroxypropionate) (P(3HP)) block in the block copolymer measured by differential scanning calorimetry, and the P(3HP) Tcc area is an integral value of the peak at the crystallization temperature (Tcc) of the poly(3-hydroxypropionate) block in the block copolymer measured by differential scanning calorimetry.

In addition, the integral values of the peaks at Tm and Tcc refer to values obtained by integrating the areas under the peaks representing Tm and Tcc, respectively.

At this time, differential scanning calorimetry for measuring Tm and Tcc of each block may be performed using PerkinElmer DSC800. In addition, the sample to be analyzed is heated from 25 °C to 250 °C at 10 °C per minute under a nitrogen atmosphere, cooled again from 250 °C to -50 °C at -10 °C per minute, and heated again from -50 °C to 250 °C at 10 °C per minute to obtain an endothermic curve, thereby confirming Tm and Tcc.

The hydroxyalkanoate-lactide copolymer may have a weight average molecular weight (Mw) of 50,000 to 300,000 g/mol, more specifically, 50,000 g/mol or more, 70,000 g/mol or more, or 100,000 g/mol or more, and 300,000 g/mol or less, 200,000 g/mol or less, or 150,000g/mol or less, as measured by gel permeation chromatography (GPC). When the weight average molecular weight of the hydroxyalkanoate-lactide copolymer is too small, overall mechanical properties may be remarkably lowered, and when the weight average molecular weight is too large, processing may be difficult and processability and elongation may be lowered.

The biodegradable film according to one embodiment includes the hydroxyalkanoate-lactide copolymer. For example, the hydroxyalkanoate-lactide copolymer may be included in an amount of 3 to 40 wt%, more specifically 3 wt% or more, 5 wt% or more, or 7 wt% or more, and 40 wt% or less, 35 wt% or less, or 30 wt% or less based on 100 wt% of the total biodegradable film.

When the hydroxyalkanoate-lactide copolymer is included in an excessively small amount in the biodegradable film, tensile properties such as Young's modulus and yield strength may be deteriorated. When the hydroxyalkanoate-lactide copolymer is included in an excessive amount in the biodegradable film, the elongation may be lowered.

The biodegradable film according to one embodiment includes polybutylene adipate terephthalate (PBAT).

The polybutylene adipate terephthalate (PBAT) is a biodegradable resin and may be included in an amount of 30 to 98 wt%, more specifically 30 wt% or more, 40 wt% or more, or 50 wt% or more, and 98 wt% or less, 95 wt% or less, or 92 wt% or less, based on 100 wt% of the total biodegradable film.

When the polybutylene adipate terephthalate (PBAT) is included in an excessively small amount in the biodegradable film, the elongation may be lowered, and when the polybutylene adipate terephthalate (PBAT) is included in an excessive amount in the biodegradable film, tensile properties such as Young's modulus and yield strength may be deteriorated.

The weight ratio of the hydroxyalkanoate-lactide copolymer and polybutylene adipate terephthalate (PBAT) included in the biodegradable film according to one embodiment may be 5:95 to 50:50, 5:95 to 40 :60, or 10:90 to 30:70.

When the polybutylene adipate terephthalate (PBAT) is included in an excessively small amount compared to the hydroxyalkanoate-lactide copolymer, the elongation may be lowered, and when the polybutylene adipate terephthalate (PBAT) is included in an excessive amount compared to the hydroxyalkanoate-lactide copolymer, tensile properties such as Young's modulus and yield strength may be deteriorated.

The biodegradable film according to one embodiment may further include thermoplastic starch.

The present inventors have found that the biodegradable film prepared by compounding a hydroxyalkanoate-lactide copolymer and thermoplastic starch with polybutylene adipate terephthalate (PBAT) has excellent compatibility between the materials, resulting in excellent tensile properties such as yield strength and Young's modulus.

In addition, the biodegradable film may further include thermoplastic starch to increase processability of polybutylene adipate terephthalate, and increase the biodegradation rate.

The thermoplastic starch is prepared by adding a plasticizer to starch, which is a natural polymer. In addition, it may be starch imparted with thermoplasticity capable of freely changing its shape without being carbonized even at a certain temperature or higher like conventional general-purpose resins such as polyethylene, polystyrene, and polypropylene.

The thermoplastic starch may include at least one selected from the group consisting of rice starch, wheat starch, corn starch, sweet potato starch, potato starch, tapioca starch, cassava starch, and modified starch thereof.

In addition, the plasticizer included in the starch, a natural polymer, may be at least one selected from the group consisting of isosorbide, glycerol, sorbitol, fructose, formamide, xylitol, corn oil and cooking oil.

The plasticizer may be included in an amount of 5 wt% or more and 50 wt% or less, 10 wt% or more and 45 wt% or less, or 15 wt% or more and 35 wt% or less, based on 100 wt% of the total thermoplastic starch.

The thermoplastic starch may be included in an amount of 10 to 70 wt%, specifically 10 wt% or more, 15 wt% or more, or 20 wt% or more, and 70 wt% or less, 60 wt% or less, or 50 wt% or less based on 100 wt% of the total biodegradable film.

When the thermoplastic starch is included in an excessively small amount in the biodegradable film, the biodegradation rate may be lowered and tensile properties such as Young's modulus and yield strength may be lowered. When the thermoplastic starch is included in an excessive amount in the biodegradable film, the elongation may be lowered.

As described above, the hydroxyalkanoate-lactide copolymer, polybutylene adipate terephthalate (PBAT) and thermoplastic starch are added to the biodegradable film, and the thermoplastic starch may be added in an amount of 10 to 100 parts by weight, 20 to 90 parts by weight, 30 to 80 parts by weight, or 30 to 70 parts by weight based on 100 parts by weight of the sum of the hydroxyalkanoate-lactide copolymer and polybutylene adipate terephthalate (PBAT).

The biodegradable film according to one embodiment may further include a compatibilizer to improve mechanical properties by improving bonding strength of the hydroxyalkanoate-lactide copolymer and polybutylene adipate terephthalate (PBAT). In addition, the compatibilizer may improve mechanical properties by improving bonding strength of the hydroxyalkanoate-lactide copolymer, polybutylene adipate terephthalate (PBAT), and thermoplastic starch. The compatibilizer can act as a chain extender to increase a molecular weight, thereby increasing a melt viscosity and improving moldability such as extensibility.

The compatibilizer is not limited thereto, but may be a compound containing at least one functional group selected from a glycidyl group, an acid anhydride group, a carbodiimide group, an isocyanate group, an oxazoline group, and an amino group.

Examples of the glycidyl group-containing compound may include glycidyl ether compounds, glycidyl ester compounds, glycidyl amine compounds, glycidyl imide compounds, glycidyl (meth)acrylate compounds, and alicyclic epoxy compounds. Commercially available products may include "BIOMAX (registered trademark)" Strong series of DuPont, which is a copolymer of ethylene, acrylic acid ester, and glycidyl(meth)acrylate, "LOTADER (registered trademark)" series of Arkema, "JONCRYL (registered trademark)" series of BASF, which is an acrylic/styrene-based copolymer containing glycidyl groups, " Reseda (registered trademark)" series of Toa Gosei Co., Ltd., which is an acrylic resin containing glycidyl groups, and "Alfon (registered trademark)" series of the same company. Moreover, examples of the acid anhydride group-containing compound may include succinic anhydride, maleic anhydride, phthalic anhydride, and the like. Commercially available products may include registered patent 10-1970847 - 10 -"BONDINE (registered trademark)" series of Arkema, which is a copolymer of ethylene, acrylic acid ester, and maleic anhydride, "OREVAC (registered trademark)" series of Arkema, which is a maleic anhydride graft polymer, "Bynel" series of DuPont, "Umex (registered trademark)" series of Sanyo Chemical Industries, "KRATON (registered trademark)" series of Kraton, which is obtained by copolymerization of a styrene-ethylene-butylene-styrene copolymer (SEBS) and maleic anhydride, and the like. The carbodiimide group-containing compound is a compound having at least one carbodiimide group represented by (-N=C=N-) in the molecule, and commercially available products may include "CARBODILITE (registered trademark)" series of Nisshin Bosei Co., Ltd, "STABAXOL (registered trademark)" series of Rhein Chemie, and the like. Examples of the isocyanate group-containing compound may include hexamethylene diisocyanate, and the like.

For example, the compatibilizer may include a repeating unit represented by the following Chemical Formula 1. 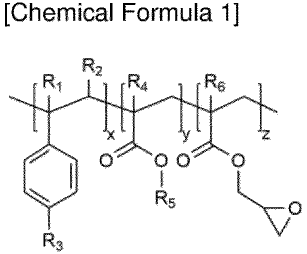 in Chemical Formula 1,
R₁ to R₆ may each independently be hydrogen, deuterium, hydroxy, nitro, amino, substituted or unsubstituted C2 to C60 alkyl, substituted or unsubstituted C2 to C60 alkoxy, substituted or unsubstituted C2 to C60 alkenyl, substituted or unsubstituted C4 to C60 cycloalkyl, substituted or unsubstituted C6 to C60 aryl, or substituted or unsubstituted C2 to C60 heteroaryl containing at least one of O, N, Si and S.

For example, R₁ to R₃ may each independently be hydrogen or deuterium.

In addition, R₄ to R₆ may each independently be hydrogen, deuterium, methyl, ethyl or propyl.

In addition, R₅ may be C2 to C60 alkyl.

x, y, and z may each independently be an integer of 1 to 20.

The compatibilizer may be included in an amount of 0.1 to 10 parts by weight, more specifically 0.1 parts by weight or more, 0.2 parts by weight or more, or 0.3 parts by weight or more, and 10 parts by weight or less, 5 parts by weight or less, or 3 parts by weight or less based on 100 parts by weight of the biodegradable film.

When the compatibilizer is included in an excessively small amount in the biodegradable film, mechanical properties are not improved, and when the compatibilizer is included in an excessive amount in the biodegradable film, the melt viscosity may be excessively high, resulting in lowered moldability.

The biodegradable film according to one embodiment may have a yield strength of 7 MPa or more, 8 MPa or more, or 7 MPa to 30 MPa, as measured according to ASTM D882-07.

In addition, the biodegradable film may have a Young's Modulus of 80 MPa or more, 85 MPa or more, 90 MPa or more, or 100 MPa to 800 MPa, as measured according to ASTM D882-07.

The thickness of the biodegradable film according to one embodiment may be 10 to 300 µm, more specifically 10 µm or more, 20 µm or more, or 30 µm or more, and 300 µm or less, 200 µm or less, or 150 µm or less. When the thickness of the film is within the above-described range, elasticity is strong, handling properties are excellent, and winding and unwinding properties of a roll may be improved.

When the film is too thin, tensile strength, tear strength, and elongation are deteriorated, so that the film may be punctured or torn during use, and when the film is too thick, cost competitiveness may be lowered.

The biodegradable film can be used as an agricultural mulching film, disposable gloves, individual medical packaging, food packaging, garbage bags, or bags for various industrial products.

A method for producing the biodegradable film is not particularly limited, but a composition may be prepared by a melt kneading method of melt kneading a hydroxyalkanoate-lactide copolymer, polybutylene adipate terephthalate (PBAT) and/or thermoplastic starch; or by uniformly mixing a solution in which each component is dissolved in a solvent, and then removing the solvent.

The melt kneading method is not particularly limited, but a conventional mixer such as a kneader, a roll mill, a Banbury mixer, a single screw or twin screw extruder may be used. During melt kneading, the temperature of the extruder may be 150 °C to 240 °C, 160 °C to 220 °C, or 170 °C to 200 °C.

The biodegradable film may be obtained by a conventional film manufacturing method such as an inflation method, a tubular method, or a T-die casting method using a composition prepared by a melt kneading method or the like. For example, the composition may be pelletized, and the pellets may be dried at 60 to 100 °C for 6 hours or more to control the moisture content to 1,200 ppm or less, 500 ppm or less, or 200 ppm or less.

Thereafter, a film may be prepared by applying the pelletized composite to a release film, putting it in a hot press and then applying pressure. At this time, the temperature may be 130 °C to 250 °C, 150 °C to 220 °C or 160 °C to 200 °C, and the pressure may be 5 MPa to 20 MPa, 8 MPa to 17 MPa, or 10 MPa to 15 MPa.

### ADVANTAGEOUS EFFECTS

According to the present disclosure, there may be provided a biodegradable film containing biomaterials having excellent tensile properties such as yield strength and Young's modulus while maintaining eco-friendliness and biodegradability.

### BRIEF DESCRIPTION OF THE DRAWINGS

FIG. 1 is a stress-strain curve of the films prepared in Examples 1 to 4 and Comparative Example 1.
FIG. 2 is a stress-strain curve of the films prepared in Examples 5 to 9 and Comparative Example 2.

### DETAILED DESCRIPTION OF THE EMBODIMENTS

The present invention will be described in more detail with the following examples. However, these examples are provided for illustrative purposes only, and the contents of the present invention are not limited by the following examples.

### Preparation Example 1: Preparation of 3-hydroxypropionate-lactide block copolymer

### (1) Preparation of polylactic acid prepolymer

25 g of an 85% L-lactic acid aqueous solution was added to a 100 ml Schlenk flask in an oil bath, and pressure reduction was performed at 70 °C and 50 mbar for 2 hours to remove moisture from L-lactic acid. Thereafter, 0.4 parts by weight of p-toluenesulfonic acid (p-TSA) and 0.1 part by weight of SnCl₂ catalyst were added based on 100 parts by weight of lactate, and melt polycondensation was performed at 150 °C for 12 hours. After the reaction was completed, the reactant was dissolved in chloroform and then extracted with methanol to obtain a polylactic acid prepolymer (weight average molecular weight: 8,000 g/mol).

### (2) Preparation of poly(3-hydroxypropionate) prepolymer

25 ml of a 60% 3-hydroxypropionate aqueous solution was added to a 100 ml Schlenk flask in an oil bath, and water in 3-hydroxypropionate was removed at 50 °C and 50 mbar for 3 hours. Thereafter, oligomerization was performed at 70 °C and 20 mbar for 2 hours, and then 0.4 parts by weight of p-toluenesulfonic acid (p-TSA) catalyst based on 100 parts by weight of 3-hydroxypropionate was added to the reaction flask, followed by melt polycondensation at 110 °C for 24 hours. After the reaction was completed, the reactant was dissolved in chloroform and then extracted with methanol to obtain a poly(3-hydroxypropionate) prepolymer (weight average molecular weight: 26,000 g/mol).

### (3) Preparation of block copolymer

The polylactic acid prepolymer and the poly(3-hydroxypropionate) prepolymer were mixed at a weight ratio of 9:1 and added in a 100 ml Schlenk flask in an oil bath to a total content of 30 g, followed by adding 90 mg of p-toluenesulfonic acid (p-TSA), and annealing at 60 °C for 3 hours. Thereafter, solid-state polymerization was performed while mixing at 150 °C and 0.5 mbar using an evaporator for 24 hours to prepare a 3-hydroxypropionate-lactide block copolymer (weight average molecular weight: 130,000 g/mol).

Meanwhile, the weight average molecular weight of the polylactic acid prepolymer, poly(3-hydroxypropionate) prepolymer, and block copolymer was measured using gel permeation chromatography (GPC).

### Preparation Example 2: Preparation of thermoplastic starch

225 g of corn starch and 75 g of glycerol were mixed in a mixer on a dry weight basis, and then added into an extruder for compounding. The temperature range of the extruder was 80 to 150 °C, the screw speed was set to 150 rpm, and the extruded strand was cut with a pelletizer to prepare thermoplastic starch pellets.

### <Examples and Comparative Examples>

### Example 1: Preparation of biodegradable film

90 g of polybutylene adipate terephthalate (PBAT, Solpol 1000N, manufactured by SOLTECH) and 10 g of the 3-hydroxypropionate-lactide block copolymer prepared in Preparation Example 1 were hand-mixed on a dry weight basis, and added to an extruder for compounding. The temperature range of the extruder was 170 to 190 °C, the screw speed was set to 150 rpm, and the extruded strand was cut with a pelletizer to prepare composite pellets. After applying the prepared composite pellets to a release film, they were placed in a hot press and a pressure of 12 MPa was applied at 190 °C to prepare a film having a thickness of 100 µm.

### Examples 2 to 5 and Comparative Example 1: Preparation of biodegradable film

A film was prepared in the same manner as in Example 1, except that the contents of polybutylene adipate terephthalate, 3-hydroxypropionate-lactide block copolymer and compatibilizer (Joncryl^{®} ADR 4468, manufactured by BASF) were changed as Table 1 below. Meanwhile, "-" in Table 1 means none.

**[Table 1]**

| (unit: g) | polybutylene adipate terephthalate | 3-hydroxypropionate-lactide block copolymer | compatibilizer |
|---|---|---|---|
| Example 1 | 90 | 10 | - |
| Example 2 | 80 | 20 | - |
| Example 3 | 90 | 10 | 1 |
| Example 4 | 80 | 20 | 1 |
| Comparative Example 1 | 100 | - | - |

### Example 5: Preparation of biodegradable film

42 g of polybutylene adipate terephthalate (PBAT, Solpol 1000N, manufactured by SOLTECH), 18 g of the 3-hydroxypropionate-lactide block copolymer prepared in Preparation Example 1, 40 g of the thermoplastic starch prepared in Preparation Example 2 and 0.5 g of a compatibilizer (Joncryl^{®} ADR 4468, manufactured by BASF) were hand-mixed on a dry weight basis, and added to an extruder for compounding. The temperature range of the extruder was 170 to 190 °C, the screw speed was set to 150 rpm, and the extruded strand was cut with a pelletizer to prepare composite pellets. After applying the prepared composite pellets to a release film, they were placed in a hot press and a pressure of 12 MPa was applied at 160 °C to prepare a film having a thickness of 100 µm.

### Examples 6 to 9 and Comparative Example 2: Preparation of biodegradable film

A film was prepared in the same manner as in Example 5, except that the contents of polybutylene adipate terephthalate, 3-hydroxypropionate-lactide block copolymer, thermoplastic starch, and compatibilizer were changed as Table 2 below. Meanwhile, "-" in Table 2 means none.

### Comparative Example 3: Preparation of biodegradable film

90 g of polybutylene adipate terephthalate (PBAT, Solpol 1000N, manufactured by SOLTECH) and 10 g of the polylactic acid (PLA, product name: PLA 2003D, manufactured by NATUREWORKS) were hand-mixed on a dry weight basis, and added to an extruder for compounding. The temperature range of the extruder was 170 to 190 °C, the screw speed was set to 150 rpm, and the extruded strand was cut with a pelletizer to prepare composite pellets. After applying the prepared composite pellets to a release film, they were placed in a hot press and a pressure of 12 MPa was applied at 190 °C to prepare a film having a thickness of 100 µm.

**[Table 2]**

| (unit: g) | polybutylene adipate terephthalate | 3-hydroxypropionate-lactide block copolymer | thermoplastic starch | compatibilizer |
|---|---|---|---|---|
| Example 5 | 42.0 | 18.0 | 40.0 | 0.5 |
| Example 6 | 48.0 | 12.0 | 40.0 | 0.5 |
| Example 7 | 52.5 | 22.5 | 25.0 | 0.5 |
| Example 8 | 60.0 | 15.0 | 25.0 | 0.8 |
| Example 9 | 67.5 | 7.5 | 25.0 | 1.0 |
| Comparative Example 2 | 100 | - | - | - |
| Comparative Example 3 | 90 | polylactic acid 10 | - | - |

### Evaluation

### 1. Evaluation of tensile properties

Tensile properties of the films of Examples and Comparative Examples were evaluated according to ASTM D882-07. The tensile properties include yield strength, Young's modulus, ultimate tensile strength and elongation at break, and the results are shown in Tables 3 and 4 below.

The yield strength is the maximum stress at which permanent inelastic deformation begins. The yield point is the point (load) at which a material yields, i.e., an increase in strain occurs without an increase in stress. The Young's modulus is the ratio of stress to strain in the elastic region of the stress-strain curve (before the yield point). The ultimate tensile strength is the maximum stress at which a material can withstand before breaking. The elongation at break is the strain at break, or the rate of change in length at break.

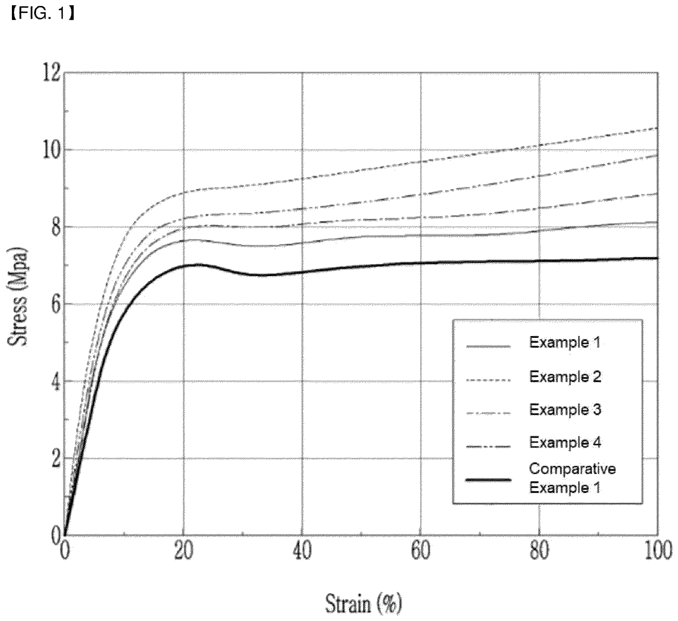

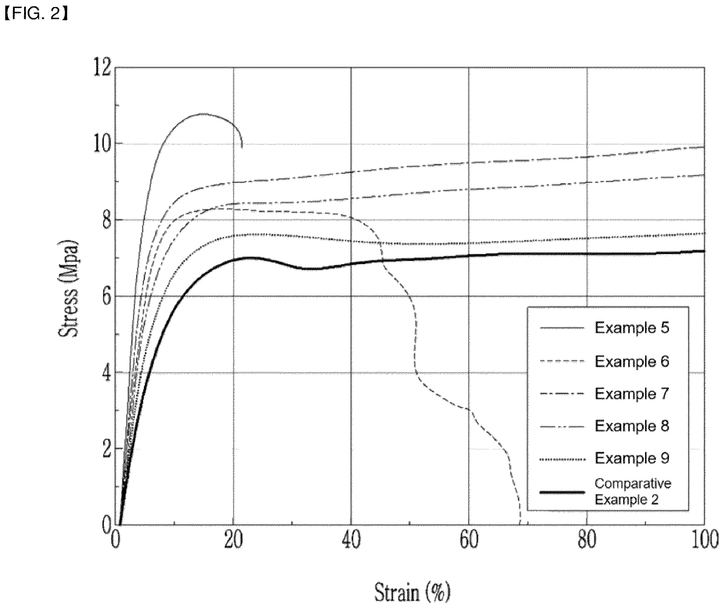

FIG. 1 is a stress-strain curve as a result of evaluating tensile properties of Examples 1 to 4 and Comparative Example 1, and FIG. 2 is a stress-strain curve as a result of evaluating tensile properties of Examples 5 to 9 and Comparative Example 2. The Young's modulus was calculated as the highest slope value in the initial part of the curve, and the yield strength was calculated as the tensile strength at which the Young's modulus and the slope begin to differ by more than 3%.

**[Table 3]**

| | yield strength (MPa) | Young's modulus (MPa) | ultimate tensile strength (MPa) | elongation at break (%) |
|---|---|---|---|---|
| Example 1 | 7.80 | 98 | 22.8 | 629 |
| Example 2 | 8.93 | 133 | 16.8 | 552 |
| Example 3 | 7.90 | 86 | 25.5 | 603 |
| Example 4 | 8.27 | 96 | 26.6 | 599 |
| Comparative Example 1 | 6.85 | 79 | 40.0 | 831 |

According to Table 3, it was confirmed that Examples 1 to 4 were excellent in tensile properties including yield strength, Young's modulus, ultimate tensile strength and elongation at break, and in particular, were remarkably excellent in yield strength and Young's modulus. In addition, it was confirmed that Examples 3 and 4, which further included a compatibilizer, were superior in ultimate tensile strength and elongation at break to those without using the compatibilizer.

On the other hand, it was confirmed that Comparative Example 1 using only polybutylene adipate terephthalate was inferior in yield strength and Young's modulus.

**[Table 4]**

| | yield strength (MPa) | Young's modulus (MPa) | ultimate tensile strength (MPa) | elongation at break (%) |
|---|---|---|---|---|
| Example 5 | 10.8 | 347 | 10.8 | 20 |
| Example 6 | 9.1 | 238 | 9.4 | 66 |
| Example 7 | 8.9 | 276 | 10.1 | 116 |
| Example 8 | 8.4 | 182 | 12.2 | 338 |
| Example 9 | 7.4 | 147 | 17.4 | 607 |
| Comparative Example 2 | 6.9 | 79 | 40.0 | 831 |
| Comparative Example 3 | - | 79 | 26.1 | 756 |

According to Table 4, it was confirmed that Examples 5 to 9 were excellent in tensile properties including yield strength, Young's modulus, ultimate tensile strength and elongation at break, and in particular, were remarkably excellent in yield strength and Young's modulus.

On the other hand, it was confirmed that Comparative Example 2 using only polybutylene adipate terephthalate was inferior in yield strength and Young's modulus, and Comparative Example 3 using polylactic acid was inferior in Young's modulus.

## Claims

1. A biodegradable film, comprising
a hydroxyalkanoate-lactide copolymer and polybutylene adipate terephthalate (PBAT).

2. The biodegradable film of Claim 1,
further comprising thermoplastic starch.

3. The biodegradable film of Claim 2,
wherein the thermoplastic starch comprises at least one selected from the group consisting of rice starch, wheat starch, corn starch, sweet potato starch, potato starch, tapioca starch, cassava starch, and modified starch thereof.

4. The biodegradable film of Claim 1,
wherein the hydroxyalkanoate-lactide copolymer is a 3-hydroxypropionate-lactide copolymer.

5. The biodegradable film of Claim 4,
wherein the 3-hydroxypropionate-lactide copolymer is a block copolymer in which a polylactic acid prepolymer and a poly(3-hydroxypropionate) prepolymer are polymerized.

6. The biodegradable film of Claim 5,
wherein at least one of the polylactic acid prepolymer and the poly(3-hydroxypropionate) prepolymer has a weight average molecular weight of more than 20,000 g/mol to 50,000 g/mol.

7. The biodegradable film of Claim 5,
wherein a weight ratio of the polylactic acid prepolymer and the poly(3-hydroxypropionate) prepolymer is 95:5 to 50:50.

8. The biodegradable film of Claim 5,
wherein the 3-hydroxypropionate-lactide copolymer has a sum of crystallinity of a polylactic acid block and a crystallinity a poly(3-hydroxypropionate) block of 20 to 100, when calculated according to Equations 1 and 2: Crystallinity of polylactic acid block (XC_PLA)= [(PLA Tm area)-(PLA Tcc area)]/93.7 (In Equation 1, the PLA Tm area is an integral value of a peak at a melting temperature (Tm) of the polylactic acid (PLA) block within the block copolymer measured by differential scanning calorimetry, and the PLA Tcc area is an integral value of a peak at a crystallization temperature (Tcc) of the polylactic acid block within the block copolymer measured by differential scanning calorimetry) Crystallinity of poly(3-hydroxypropionate) block (Xc_P(3HP))= [(P(3HP) Tm area)-(P(3HP) Tcc area)]/64 (In Equation 2, the P(3HP) Tm area is an integral value of a peak at a melting temperature (Tm) of the poly(3-hydroxypropionate) (P(3HP)) block within the block copolymer measured by differential scanning calorimetry, and the P(3HP) Tcc area is an integral value of a peak at a crystallization temperature (Tcc) of the poly(3-hydroxypropionate) block within the block copolymer measured by differential scanning calorimetry)

9. The biodegradable film of Claim 1,
wherein the hydroxyalkanoate-lactide copolymer has a weight average molecular weight of 50,000 to 300,000.

10. The biodegradable film of Claim 1,
wherein a weight ratio of the hydroxyalkanoate-lactide copolymer and the polybutylene adipate terephthalate (PBAT) is 5:95 to 50:50.

11. The biodegradable film of Claim 2,
comprising 10 to 100 parts by weight of the thermoplastic starch based on 100 parts by weight of a sum of the hydroxyalkanoate-lactide copolymer and the polybutylene adipate terephthalate (PBAT).

12. The biodegradable film of Claim 1,
wherein the biodegradable film further comprises a compatibilizer.

13. The biodegradable film of Claim 12,
wherein the compatibilizer comprises a repeating unit represented by Chemical Formula 1: 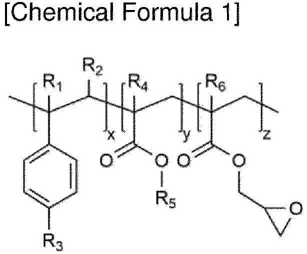 in Chemical Formula 1,
R₁ to R₆ are each independently hydrogen, deuterium, hydroxy, nitro, amino, substituted or unsubstituted C2 to C60 alkyl, substituted or unsubstituted C2 to C60 alkoxy, substituted or unsubstituted C2 to C60 alkenyl, substituted or unsubstituted C4 to C60 cycloalkyl, substituted or unsubstituted C6 to C60 aryl, or substituted or unsubstituted C2 to C60 heteroaryl containing at least one of O, N, Si and S, and
x, y, and z are each independently an integer of 1 to 20.

14. The biodegradable film of Claim 12,
comprising 0.1 to 10 parts by weight of the compatibilizer based on 100 parts by weight of the biodegradable film.

15. The biodegradable film of Claim 1,
wherein the biodegradable film has a yield strength of 7 MPa or more, when measured according to ASTM D882-07.

16. The biodegradable film of Claim 1,
wherein the biodegradable film has a Young's modulus of 80 MPa or more, when measured according to ASTM D882-07.
